# DEMANDE DE BREVET EUROPEEN

(11) **EP 2 133 629 A1**
(43) Date de publication de la demande: **16.12.2009**
(21) Numéro de dépôt: 08356081.3
(22) Date de dépôt: 12.06.2008
(51) Int. Cl.: F24D 3/18, F24D 12/02

(54) **Dispositif de couplage entre une pompe à chaleur et une chaudiére à fuel ou à gaz**

(71) Demandeur: Surrel, Yves, 38890 Saint Chef (FR); Surrel, Vincent, 38890 Saint Chef (FR)
(72) Inventeur: Surrel, Yves, 38890 Saint Chef (FR); Surrel, Vincent, 38890 Saint Chef (FR)
(74) Mandataire: Schmitt, John

(57) **Abrégé**

La présente invention concerne un dispositif de couplage entre une pompe à chaleur (2) pouvant fonctionner en mode inversé et un circuit de chauffage comprenant une chaudière (1) à fuel ou à gaz, ledit dispositif de couplage étant caractérisé par le fait qu'il présente :
- une régulation (3) de température de l'eau en circulation qui détermine le fonctionnement global de l'installation de chauffage ou de refroidissement de l'habitation selon la température extérieure et la température intérieure souhaitée,
- un réseau de canalisations (4, 5, 6, 8, 9, 15, 20) avec des vannes (12, 18) autorisant la circulation de l'eau de chauffage dans différents conduits en fonction de la température de l'eau de chauffage au départ et au retour dans le dispositif de couplage,
- lesquelles vannes (12, 18) étant réglées en ouverture et en fermeture à des températures différentes et recevant les informations de deux capteurs de température (13, 19) positionnés en des points différents dudit réseau de canalisations.

## Description

L'invention concerne un dispositif de couplage entre une pompe à chaleur et une chaudière à fuel ou à gaz.

Les chaudières à fuel ou à gaz sont largement répandues et permettent un chauffage aisé dans toutes les plages de température, cependant ce type de chauffage utilise des énergies fossiles non renouvelables dont les prix ne cessent de monter. Dans un double objectif d'économie d'énergie et de respect de l'environnement il est souhaitable de limiter le recours à ce type d'énergie.

La pompe à chaleur utilisée en tant que système de chauffage est au contraire très économe en énergie et plus respectueuse de l'environnement mais présente un inconvénient qui limite son utilisation : la température maximum de chauffage de l'eau est limitée au voisinage de 50°C.

Lorsqu'une pompe à chaleur est utilisée il est usuellement nécessaire de compléter le dispositif de chauffage pour les périodes hivernales par des convecteurs électriques ou l'apport d'autres sources d'énergie, la nécessité d'un deuxième système de chauffage et l'absence de régulation automatisée entre les deux sources énergétiques alourdit l'investissement et présente une difficulté de fonctionnement qui est rédhibitoire pour beaucoup de personnes.

Il n'existe pas à ce jour de dispositif permettant l'emploi principal de l'énergie produite par une pompe à chaleur et l'emploi auxiliaire, en complément, d'une autre source d'énergie, de manière automatique et avec un couplage efficace, dans la même installation de chauffage.

Par ailleurs les chaudières au gaz ou au fuel actuelles ne sont pas conçues pour être jumelées avec d'autres installations de chauffage, pourtant un dispositif permettant d'amener de l'eau préchauffée dans de telles chaudières permettrait une économie considérable d'énergie.

L'invention a donc pour objectif de résoudre ces principales difficultés en proposant un dispositif de couplage entre une pompe à chaleur et une chaudière à gaz ou à fuel.

La présente invention concerne ainsi un dispositif de couplage entre une pompe à chaleur pouvant fonctionner en mode inversé et un circuit de chauffage comprenant une chaudière à fuel ou à gaz, ledit dispositif de couplage étant caractérisé par le fait qu'il présente :
- une régulation de température de l'eau en circulation qui détermine le fonctionnement global de l'installation de chauffage ou de refroidissement de l'habitation selon la température extérieure et la température intérieure souhaitée,
- un réseau de canalisations avec des vannes autorisant la circulation de l'eau de chauffage dans différents conduits en fonction de la température de l'eau de chauffage au départ et au retour dans le dispositif de couplage,
- lesquelles vannes étant réglées en ouverture et en fermeture à des températures différentes et recevant les informations de deux capteurs de température positionnés en des points différents du réseau de canalisations.

Les avantages du dispositif de couplage entre la pompe à chaleur et une chaudière traditionnelle sont multiples :
- Dans les périodes de températures modérément basses, c'est à dire supérieures à 0°C, la pompe à chaleur peut fonctionner seule sans apport d'énergie complémentaire, de fait l'eau de chauffage peut être réalisée de manière très économique une grande partie de l'année.
- Dans les périodes de grand froid, en hiver, la pompe à chaleur permet un chauffage de l'eau amenée à l'entrée de la chaudière à une température de l'ordre de 50°C avec une faible consommation énergétique, au lieu d'une température de l'ordre de 15°C pour l'apport en eau dans les chaudières classiques. De cette manière la chaudière complète uniquement l'énergie nécessaire pour amener l'eau de chauffage aux températures supérieures à 50°C, ce qui représente un surcoût modéré par rapport au chauffage uniquement au gaz ou au fuel.
- Dans les périodes de chaleur estivales le dispositif de couplage permet d'éviter que l'eau transite par la chaudière et permet l'emploi de la pompe à chaleur fonctionnant dans un mode inversé comme dispositif de rafraîchissement avec l'installation de ventilo-convecteurs dans l'habitation. Le même dispositif est donc utilisable comme source de froid par l'utilisation d'une pompe à chaleur réversible.
- Le passage d'un mode de fonctionnement à un autre est réalisé automatiquement au moyen du dispositif de couplage qui comporte une régulation, des tuyauteries, des capteurs de température et des vannes permettant différents cheminements pour l'eau en circulation, selon la température requise dans l'habitation.
- Un avantage déterminant du dispositif de couplage est qu'il permet de greffer une pompe à chaleur sur un dispositif de chauffage existant traditionnel sans qu'il soit nécessaire de réaliser un investissement trop important. Le remplacement de quelques radiateurs par des ventilo-convecteurs permet d'assurer en plus un dispositif de rafraîchissement dans des immeubles ou la climatisation serait prohibitive.
- Le dispositif de couplage est simple et utilise des composants éprouvés pour leur fiabilité de manière à constituer un ensemble fonctionnant en toute sécurité avec un entretien minimum.

D'autres caractéristiques et avantages de l'invention se dégageront de la description qui va suivre en regard des dessins annexés qui ne sont donnés qu'à titre d'exemples non limitatifs.
La figure 1 est une vue d'ensemble de l'installation de chauffage comportant un dispositif de couplage selon l'invention.
La figure 2 est une vue détaillée du dispositif de couplage représentant les différents composants notamment les canalisations, vannes et capteurs de température.
La figure 3 présente les différentes plages de fonctionnement de la pompe à chaleur et de la chaudière en fonction des températures extérieures et des températures requises pour l'eau de chauffage.

L'invention permet le couplage entre une pompe à chaleur pouvant fonctionner en mode inversé et une chaudière, dite classique, c'est à dire utilisant du fuel ou du gaz comme combustible.

Le principe de fonctionnement d'une pompe à chaleur est identique à celui d'un réfrigérateur. La pompe à chaleur pompe des calories dans une source froide et les réinjecte à la source chaude. La consommation énergétique sous forme d'électricité sert uniquement à mettre en mouvement les fluides, par compression. La source froide doit être une source au sens physique, c'est-à-dire capable de fournir autant de chaleur que la pompe peut en puiser, sans variation de température notable.

Il doit être compris par pompe à chaleur pouvant fonctionner en mode inversé une pompe à chaleur réversible capable de capter du froid à l'extérieur de l'habitation pour restituer les calories sous forme de chaleur à l'intérieur lorsqu'elle fonctionne en mode chauffage, et capable, en mode inversé, de fonctionner comme un réfrigérateur pour capter les calories à l'intérieur de l'habitation et les évacuer vers l'extérieur et ainsi rafraîchir l'atmosphère intérieure en période estivale.

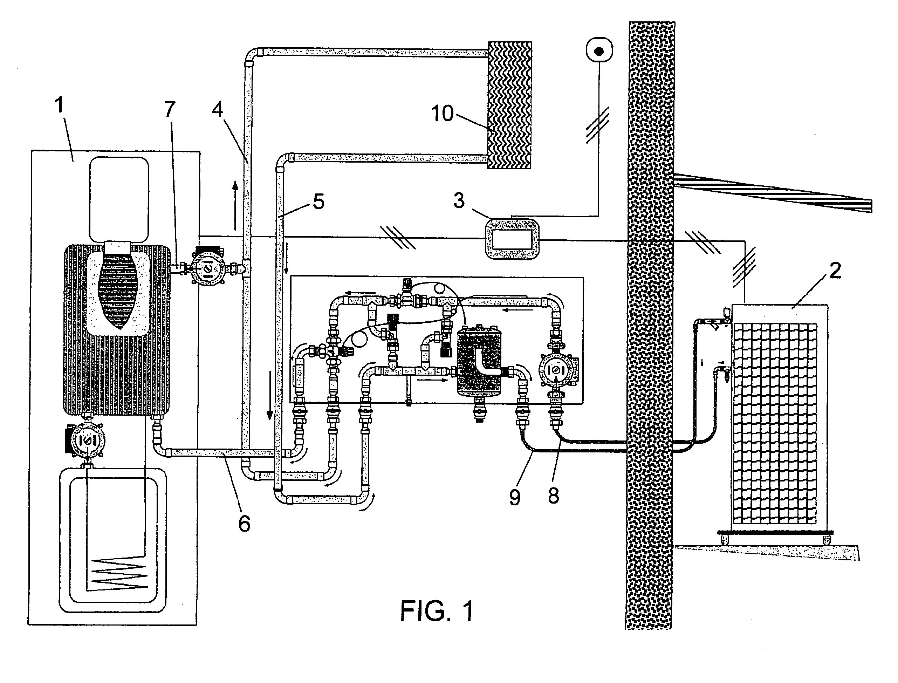

La figure 1 montre l'installation de chauffage dans son ensemble avec la chaudière 1 à gaz ou à fuel, la pompe à chaleur 2 et le dispositif de couplage selon l'invention représenté entre les deux.

Une régulation 3 de température de l'eau de chauffage détermine le fonctionnement global de l'installation de chauffage de l'habitation selon la température extérieure et la température intérieure souhaitée

Selon l'invention le fonctionnement de la pompe à chaleur 2 seule, de la chaudière 1 seule ou de la combinaison de la pompe à chaleur 2 et de la chaudière 1 est géré automatiquement selon la température de l'eau devant circuler dans l'habitation et selon les températures mesurées sur les circuits.

Il est communément admis que la différence entre la température de l'eau au départ de l'installation vers les radiateurs et échangeurs de chaleur installés dans l'habitation et la température de l'eau de retour est de l'ordre de 10°C.

L'eau de chauffage au départ passe par la canalisation 4 sur la figure 1 alors que l'eau de retour s'écoule par la canalisation 5. L'eau de chauffage a perdu une partie de ses calories au travers des différents radiateurs 10 installés dans l'habitation.

La chaudière 1 reçoit l'eau en provenance du dispositif de couplage par la canalisation 6 et l'injecte dans le circuit de chauffage par la canalisation 7 qui rejoint la canalisation 4.

L'eau en provenance de la pompe à chaleur 2 arrive par la canalisation 8 et retourne dans l'échangeur thermique par la canalisation 9.

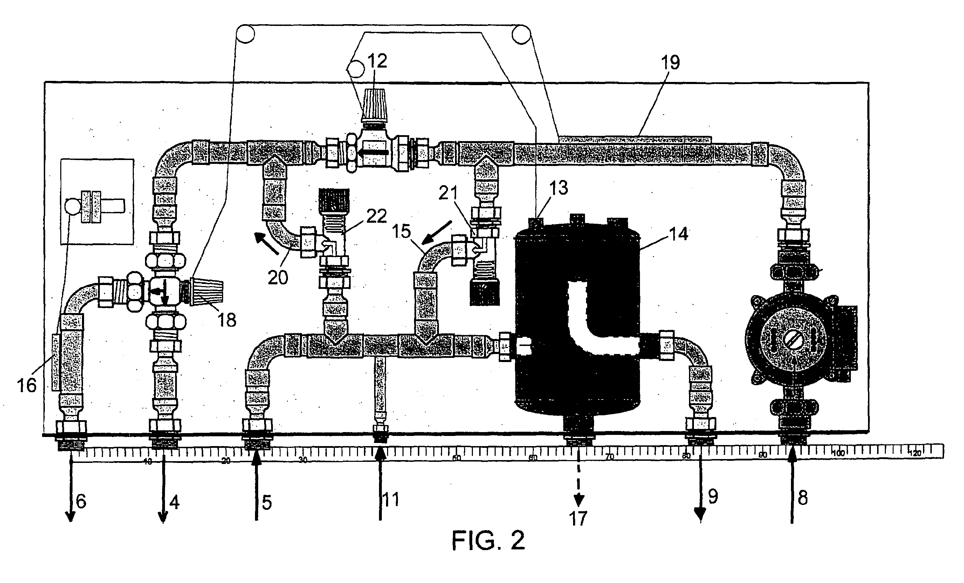

Le dispositif de couplage entre la pompe à chaleur et la chaudière est détaillé dans la figure 2 qui montre les arrivées et départs d'eau, c'est à dire les canalisations référencées 4, 5, 6, 8 et 9 sur la figure 1. Cette figure présente en outre la canalisation 11 qui correspond à l'arrivée d'eau de remplissage des circuits.

Tel que cela est représenté l'eau arrivant par la canalisation 8 en provenance de la pompe à chaleur est dirigée vers la vanne 12 qui est contrôlée en ouverture et en fermeture en fonction de la température de l'eau de retour du chauffage. La vanne 12 est positionnée sur la canalisation 8 de départ de l'eau de la pompe à chaleur vers l'installation de chauffage.

La vanne 12 est asservie au capteur de température 13 installé sur un bac de décantation des boues 14 positionné immédiatement en amont de la pompe à chaleur sur la canalisation 9 de retour de l'eau. Le capteur de température 13 mesure la température de l'eau retournant vers la pompe à chaleur.

Lorsque cette eau de retour est supérieure à sensiblement 50°C la pompe à chaleur ne peut plus fonctionner correctement et il faut l'isoler du circuit de chauffage, dans cette configuration la vanne 12 se ferme, l'eau s'écoule par la canalisation 15 et retourne directement vers la canalisation 9 en passant par le décanteur 14, l'eau tourne en boucle. Dans cette situation l'eau de retour du chauffage arrivant par la canalisation 5 emprunte la canalisation 20 dans le sens de la flèche et retourne vers l'alimentation en eau de la chaudière par la canalisation 6. Les deux by-pass 21 et 22 étant ouverts.

Lorsque l'eau de retour est inférieure à sensiblement 50°C la pompe à chaleur alimente normalement l'ensemble de l'installation de chauffage au travers de la vanne 12, les canalisations 15 et 20 étant obturées par les by-pass 21 et 22 en positions fermées.

L'eau de retour peut dépasser 50°C lorsque la température de chauffage requise par la régulation est supérieure à 60°C, dans cette configuration la chaudière à gaz ou à fuel fonctionne pour amener les calories nécessaires. Cette configuration est rencontrée essentiellement en période hivernale.

Ainsi selon l'invention la vanne 12 est réglée en ouverture ou en fermeture à une température de sensiblement 50°C pour protéger la pompe à chaleur d'une température excessive de l'eau d'arrivée.

Selon l'invention l'eau en provenance de la pompe à chaleur est injectée dans l'alimentation en eau de la chaudière jusqu'à une température limite de 50°C, tant que la température de l'eau de chauffage en retour n'atteint pas cette température la pompe à chaleur est en fonctionnement.

Selon l'invention l'eau en provenance de la pompe à chaleur est injectée dans l'alimentation en eau de la chaudière par la canalisation 6 lorsque l'eau de retour est inférieure à sensiblement 50°C, laquelle chaudière 1 est mise en fonctionnement lorsque la régulation exige une température d'eau de départ vers le chauffage supérieure à sensiblement 50°C.

Le thermostat disposé sur la canalisation 6 permet de déterminer la température de l'eau à l'entrée de la chaudière et donc la nécessité d'un chauffage additionnel ou pas.

Tant que la température requise pour le chauffage de l'habitation est inférieure à 60°C la pompe à chaleur et la chaudière amènent de manière complémentaire l'énergie nécessaire pour le chauffage. Lorsque la température requise pour l'eau de départ est supérieure à 60°C, c'est à dire que l'eau de retour est supérieure à sensiblement 50°C, seule la chaudière à gaz ou à fuel est sollicitée.

Ainsi selon l'invention l'eau en provenance de la pompe à chaleur est mise en circulation en boucle sans passer par le circuit de chauffage dès que la température de l'eau atteint sensiblement 50°C, ladite température étant mesurée par le capteur de température 13 placé sur le circuit de retour de l'eau de chauffage, ce mode de fonctionnement étant enclenché lorsque la température de l'eau de chauffage requise au départ est supérieure à sensiblement 60°C. Dans cette configuration de circuit seule la chaudière délivre l'énergie nécessaire pour assurer le chauffage.

Selon l'invention le capteur de température 13 est placé à la sortie de l'installation de chauffage et avant l'entrée dans la pompe à chaleur, de préférence dans le dispositif de couplage et plus préférentiellement encore sur le décanteur de boues 14, lequel décanteur comporte une évacuation 17 dans sa partie inférieure afin d'éliminer les microparticules et les boues contenues dans l'eau de chauffage qui pourraient obturer les échangeurs de la pompe à chaleur.

Le dispositif de couplage entre la pompe à chaleur et la chaudière comporte en outre une vanne 18 réglée en ouverture ou en fermeture à une température de sensiblement 20°C. Cette vanne est prévue pour fonctionner lorsque la pompe à chaleur est utilisée en mode inversé, c'est à dire essentiellement en période estivale.

Selon l'invention la position de la vanne 18 est automatiquement modifiée lorsque la pompe à chaleur 2 fonctionnant en mode inversé délivre de l'eau à une température sensiblement de 20°C, de manière à faire circuler uniquement l'eau en provenance de la pompe à chaleur vers l'habitation et vers des ventilo-convecteurs assurant un rafraîchissement de l'habitation. Dans cette configuration de circuit la chaudière est utilisée uniquement pour la fourniture d'eau chaude sanitaire et la pompe à chaleur fonctionne comme un réfrigérateur, en mode inversé par rapport à la fonction chauffage.

Selon l'invention un capteur de température 19 placé sur le circuit d'eau de sortie de la pompe à chaleur commande le positionnement de la vanne 18 lorsqu'une température de 20°C est atteinte en refroidissement en mode de fonctionnement inversé.

Ainsi selon les températures mesurées et selon les températures requises pour le chauffage ou le rafraîchissement de l'habitation l'ensemble de la tuyauterie avec ses différentes vannes et capteurs de température autorise la circulation de l'eau dans différents conduits et selon différents modes mettant en fonction la pompe à chaleur seule, la pompe à chaleur et la chaudière ou uniquement la chaudière.

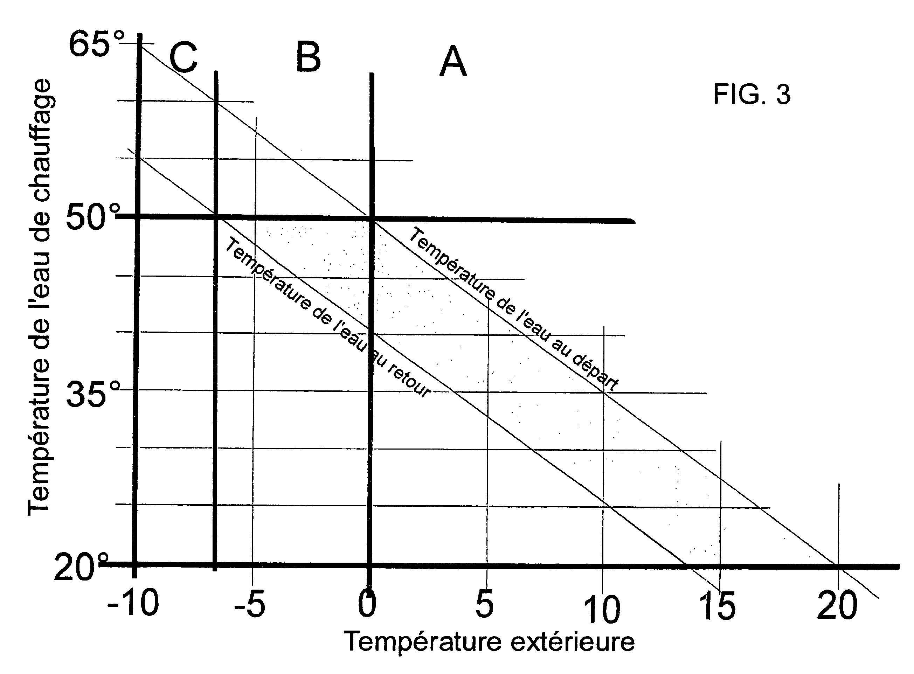

Ces différentes configurations de fonctionnement sont illustrées sur la figure 3 qui présente les modes de production de la chaleur en fonction de la température extérieure.

Le graphique de la figure 3 montre que :
- Dans la plage de température extérieure comprise entre 0 et 20°C, la zone A du graphique, seule la pompe à chaleur délivre l'énergie nécessaire au chauffage.
- Dans la plage de température extérieure comprise entre sensiblement -7°C et 0°C, la zone B du graphique, la pompe à chaleur et la chaudière fonctionnent simultanément, la température de l'eau au départ étant comprise entre 50°C et 60°C.
- Dans la plage de température inférieure à -7°C, la zone C du graphique, l'eau de retour étant supérieure à 50°C, seule la chaudière est en fonctionnement.

Plusieurs variantes sont possibles quant aux circuits employés dans le dispositif de couplage, il peut être ajouté d'autres vannes par exemple, même si cela parait moins avantageux, sans sortir du cadre de l'invention.

Il peut aussi être envisagé de placer les capteurs de température différemment et les vannes en d'autres positions sans sortir du cadre de l'invention.

La température limite indiquée de 50°C pour le retour de l'eau et le fonctionnement de la pompe à chaleur peut être sensiblement différente selon le modèle de pompe à chaleur et selon les évolutions technologiques de ces appareils, le terme sensiblement 50°C signifiant une fluctuation pouvant être de 5°C ou plus autour de cette valeur jugée comme optimale.

Le dispositif de couplage entre la pompe à chaleur et une chaudière traditionnelle peut être installé dans des chauffages domestiques, des immeubles collectifs ou des édifices publics de grandes dimensions, c'est à dire sur des installations de divers dimensionnements sans sortir du cadre de l'invention. Il peut également être envisagé l'emploi du système de couplage dans d'autres systèmes de chauffage que ceux des habitations, par exemple pour chauffer l'eau de piscines, de serres, etc...

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de couplage entre une pompe à chaleur (2) pouvant fonctionner en mode inversé et un circuit de chauffage comprenant une chaudière (1) à fuel ou à gaz, dans lequel une régulation (3) de température de l'eau en circulation qui détermine le fonctionnement global de l'installation de chauffage ou de refroidissement de l'habitation selon la température extérieure et la température intérieure souhaitée, un réseau de canalisations (4, 5, 6, 8, 9, 15, 20) avec des vannes (12, 18) autorisant la circulation de l'eau de chauffage dans différents conduits en fonction de la température de l'eau de chauffage au départ et au retour dans le dispositif de couplage, lesquelles vannes (12, 18) étant réglées en ouverture et en fermeture à des températures différentes et recevant les informations de deux capteurs de température (13, 19) positionnés en des points différents dudit réseau de canalisations, **caractérisé en ce que** la vanne (12) positionnée sur la canalisation d'eau (8) de départ de la pompe à chaleur (2) est réglée en ouverture ou en fermeture à une température de sensiblement 50°C, la fermeture de ladite vanne (12) au-dessus de sensiblement 50°C ayant pour effet de faire retourner l'eau vers la pompe à chaleur (2) à travers la canalisation (15) puis le décanteur (14) et la canalisation (9), de manière que dans cette configuration la chaudière (1) seule amène l'énergie nécessaire au chauffage de l'habitation.

2. dispositif de couplage selon la revendication 1, dans lequel le capteur de température (13) est placé au niveau du décanteur de boues (14) incorporé dans le dispositif, ledit décanteur (14) étant installé sur l'alimentation en eau de la pompe à chaleur (2).

3. Dispositif de couplage selon la revendication 1 dans lequel la vanne (18) est réglée en ouverture ou en fermeture à une température de sensiblement 20°C.

4. Dispositif de couplage selon les revendications 1 et 3, dans lequel la position de la vanne (18) est automatiquement modifiée lorsque la pompe à chaleur (2) fonctionnant en mode inversé délivre de l'eau à une température sensiblement de 20°C, de manière à faire circuler uniquement l'eau en provenance de la pompe à chaleur (2) vers l'habitation et vers des ventilo-convecteurs assurant un rafraîchissement de l'habitation, de manière que dans cette configuration la chaudière est utilisée uniquement pour la fourniture d'eau chaude sanitaire.

5. Dispositif de couplage selon les revendications 1 et 4, dans lequel le capteur de température (19) placé sur le circuit d'eau de sortie de la pompe à chaleur (2) commande le positionnement de la vanne (18).
